Europäisches Patentamt

European Patent Office

Office européen des brevets

(19)

(11) Numéro de publication: **0 199 650**
A1

(12) ## DEMANDE DE BREVET EUROPEEN

(21) Numéro de dépôt: 86400856.0

(22) Date de dépôt: 21.04.86

(51) Int. Cl.⁴: **G 02 B 27/00**
G 02 B 26/08, B 23 K 26/06
B 23 Q 35/128

(30) Priorité: 23.04.85 FR 8506111

(43) Date de publication de la demande:
29.10.86 Bulletin 86/44

(84) Etats contractants désignés:
BE CH DE GB IT LI NL

(71) Demandeur: Arnaud, Jean Pierre Alfred
23 rue de Pontoise
F-95160 Montmorency(FR)

(72) Inventeur: Arnaud, Jean Pierre Alfred
23 rue de Pontoise
F-95160 Montmorency(FR)

(74) Mandataire: Arnaud, Jean Pierre Alfred
Cabinet Arnaud 94 rue Saint-Lazare
F-75009 Paris(FR)

(54) Appareil de régulation de caractéristiques d'un faisceau lumineux, notamment d'un laser de puissance.

(57) L'invention concerne un appareil de régulation d'un faisceau lumineux.

Elle se rapporte à un appareil qui comporte un système expanseur afocal formé de deux miroirs déformables (14, 26) dont l'un (14) est mobile suivant l'axe optique reliant les deux miroirs. Deux miroirs capteurs (28, 30) forment une mire d'alignement permettant la régulation du grandissement du faisceau et du centrage de l'axe de manière que le faisceau (12) obtenu ait toujours la même dimension et soit toujours centré malgré les variations du faisceau d'entrée (10).

Application à la régulation des faisceaux laser de puissance.

Fig 1

EP 0 199 650 A1

La présente invention concerne un appareil de régulation de caractéristiques d'un faisceau lumineux, notamment d'un faisceau laser.

Bien que l'appareil de régulation selon l'invention s'applique à toutes sortes de faisceaux lumineux, par exemple à des faisceaux provenant d'une source à arc dont l'arc présente des instabilités, elle convient surtout à la régulation des caractéristiques d'un faisceau laser, et notamment d'un laser de puissance, et on la décrit dans cette application particulière.

On a déjà utilisé depuis de nombreuses années des lasers dans des opérations de soudage et de découpe dans lesquelles le faisceau laser est focalisé au foyer d'une lentille. Lorsque la répartition d'énergie dans la section du faisceau laser varie ou lorsque l'axe du faisceau se déplace parallèlement à lui-même, le point de focalisation se déplace très légèrement dans le plan focal. Cependant, comme ces opérations sont effectuées avec des optiques à très courte focale , ces déplacements sont très faibles si bien qu'on n'a pas encore éprouvé le besoin de réaliser une véritable régulation des caractéristiques des faisceaux lumineux.

Le brevet français n° 82 10 286 décrit une optique perfectionnée permettant la focalisation d'un faisceau laser dont la répartition d'énergie dans la section est quelconque, suivant une ligne le long de laquelle la densité d'énergie est constante. Le principal élément optique d'un tel système est constitué d'un miroir déformable dont l'épaisseur est variable en fonction de la répartition d'énergie du faisceau. Une correction convenable d'un faisceau par un tel miroir déformable d'épaisseur variable nécessite donc que le faisceau parvenant sur cet élément optique déformable soit toujours identique à lui-même, c'est-à-dire soit toujours convenablement centré et de dimension convenable. Dans certaines applications d'un tel système optique (par exemple la trempe des métaux ferreux ou la recristallisation du silicium) il faut que la répartition d'énergie soit maîtrisée très étroi-

2

0199650

ement, car elle ne doit pas varier de plus d'un faible pourentage de l'ordre de 1 ou 2 % le long de la ligne. Si le aisceau laser se déplace ou si sa section change de dimension, ette répartition d'énergie n'est plus convenable. Il est lonc très souhaitable de disposer d'un appareil de régulation ermettant l'obtention d'un faisceau laser toujours identique i lui-même parvenant sur cet élément optique correcteur.

On a constaté selon l'invention que les principales nstabilités d'un faisceau laser étaient de trois types :

1 - Les modifications de dimension de la section surtout lorsque la puissance du laser est modifiée.

2 - Le déplacement de l'axe central du faisceau (ou axe passant par le barycentre de la section).

3 - L'instabilité du mode.

Il existe actuellement des lasers de type industriel qui ne présentent pratiquement pas de problème en ce qui concerne la stabilité du mode. En effet, les variations de mode peuvent être considérées comme négligeables au cours d'une période de plusieurs mois. D'autres lasers sont au contraire très instables. Dans le cas particulier des lasers multimode, les variations de mode qui peuvent apparaître au cours du temps sont faibles et se compensent pratiquement au cours du temps, si bien que ce problème de stabilité de mode n'est pas primordial, lorsqu'une source laser convenable a été choisie.

Le second problème, celui du déplacement de l'axe du faisceau, se pose surtout dans le cas des lasers dits "monomode", alors que certains lasers industriels de puissance ne présentent pas cette instabilité.

Enfin, tous les lasers présentent des variations de la dimension de la section lorsque la puissance varie. Comme il est toujours nécessaire de pouvoir faire varier la puissance du laser (par exemple lors d'un changement du traitement réalisé ou de la pièce traitée), le faisceau doit toujours être régulé avant de parvenir sur l'élément optique correcteur décrit dans le brevet français précité.

Le brevet US-A-3 757 125 décrit un appareil ayant un dispositif capteur qui détermine les déplacements latéraux d'un faisceau laser et un dispositif de déplacement transversal du laser ; un dispositif de commande provoque un déplacement transversal du faisceau sans modification de sa section. Ce document ne suggère pas de dispositif expanseur, ni a fortiori la possibilité de la variation du grandissement d'un tel dispositif expanseur. Ce document ne concerne que l'instabilité du type 2 précité.

Le brevet US-A-3 957 339 décrit un appareil destiné à modifier la forme de la section d'un faisceau laser. Plus précisément, cet appareil comporte trois miroirs dont deux seulement sont importants, le troisième pouvant être supprimé. Le premier miroir est de type cylindrique avec une génératrice parallèle à un châssis et le second miroir est aussi de type cylindrique, mais a une génératrice perpendiculaire à ce même châssis. Les deux miroirs ne travaillent pas en combinaison, mais modifient, chacun dans une direction différente, une dimension du faisceau. En conséquence, ils ne forment pas un système expanseur. Tous ces miroirs ont une distance focale fixe si bien que, même ş'ils donnaient un grandissement, ce grandissement ne serait pas variable et ne permettrait donc pas une régulation.

La demande de brevet européen n° 0 141 724 concerne un appareil destiné à assurer "l'asservissement pour l'alignement automatique d'un faisceau laser", c'est-à-dire un appareil analogue à celui qui est décrit dans le brevet précité US-A-3 757 125. Cet appareil comprend un dispositif capteur et un dispositif de commande, mais ne comporte aucun dispositif expanseur de faisceau. En outre, aucun des éléments optiques incorporés à cet appareil n'a une distance focale variable. Ce document ne concerne donc que l'instabilité du type 2 précité.

Ainsi, aucun de ces documents ne suggère une régulation de la dimension de la section d'un faisceau ou de sa forme, ni seul ni en combinaison.

L'invention concerne un appareil de régulation essentiellement destiné à compenser les effets de la variation de la dimension de la section. Dans une variante, il permet aussi la compensation des effets du décentrage du faisceau.

Plus précisément, l'invention concerne un appareil de régulation de caractéristiques d'un faisceau lumineux qui peut présenter des variations de sa section, cet appareil comprenant un système expanseur qui comporte :

- un dispositif capteur sensible à au moins un paramètre de la section du faisceau et destiné à former un signal correspondant,

- un dispositif expanseur destiné à modifier la section du faisceau afin qu'une dimension au moins de celle-ci soit multipliée par un coefficient de grandissement, inférieur ou supérieur à 1, et

- un dispositif de commande destiné à recevoir le signal du dispositif capteur et à commander le dispositif expanseur par réglage de son coefficient de grandissement, jusqu'à ce que le signal du capteur corresponde à une valeur de référence.

Le dispositif expanseur comprend avantageusement au moins deux miroirs déformables. Ceux-ci sont de préférence des miroirs cylindriques de section droite circulaire.

Selon une caractéristique très avantageuse de l'invention, le dispositif expanseur est afocal.

Il est souhaitable que l'appareil de régulation comporte en outre un système de recentrage du faisceau qui comporte :

- un dispositif capteur sensible à la position du faisceau parallèlement à lui-même, par rapport à une position de référence, et destiné à former un signal correspondant,

- un dispositif de recentrage destiné à déplacer le faisceau parallèlement à lui-même dans une moins une direction perpendiculaire à l'axe du faisceau, et

- un dispositif de commande destiné à recevoir le signal du dispositif capteur et à commander le dispositif de recentrage jusqu'à ce que le faisceau se trouve à une position de référence.

Le dispositif de recentrage fonctionne de préférence par déplacement d'un miroir parallèlement à l'axe optique d'une partie du trajet optique du faisceau. Dans une variante, ce dispositif de recentrage assure le pivotement concomitant de deux miroirs autour d'axes parallèles. Ces deux modes de réalisation correspondent au réglage d'une partie de trajet optique en Z, soit par réglage de la longueur de la partie intermédiaire (barre inclinée du Z) soit par réglage de la distance séparant les deux parties extrêmes (inclinaison de la barre intermédiaire du Z).

Le dispositif capteur du système expanseur et/ou du système de recentrage peut comporter une lame transparente inclinée par rapport à l'axe du faisceau, et un analyseur de la section du faisceau. Celui-ci peut être une caméra infrarouge. Dans un autre mode de réalisation, le dispositif capteur comprend au moins un miroir ayant, sur sa face non réfléchissante, une barrette ou une matrice d'éléments thermosensibles, par exemple de thermistances.

Dans un mode de réalisation avantageux, le système expanseur et/ou de recentrage comprend deux dispositifs capteurs qui constituent ensemble une mire d'alignement.

Il est avantageux que le système expanseur et le système de recentrage aient des dispositifs capteurs qui soient au moins en partie communs.

La commande du système expanseur et/ou du système de recentrage assure le fonctionnement d'au moins un servomoteur. Dans un mode de réalisation avantageux, le dispositif de commande assure le fonctionnement de deux servomoteurs associés chacun à un miroir déformable formant un dispositif expanseur afocal. Un servomoteur peut être utilisé pour le déplacement d'un miroir parallèlement à l'axe ou deux servomoteurs peuvent être utilisés pour le pivotement concomitant de deux miroirs autour d'axes parallèles.

La commande peut être assurée totalement en boucle fermée, pour chaque servomoteur, ou, dans le cas d'un système afocal ou du pivotement concomitant de deux miroirs, l'un des servomoteurs peut être commandé en boucle fermée et

6

l'autre en fonction de la commande du premier servomoteur.

D'autres caractéristiques et avantages de l'invention ressortiront mieux de la description qui va suivre, faite en référence aux dessins annexés sur lesquels :

la figure 1 est une vue schématique en plan d'un système optique muni d'un appareil de régulation selon l'invention ;

la figure 2 est une vue en plan d'un exemple de miroir déformable de l'appareil de la figure 1, après enlèvement d'un flasque supérieur ;

la figure 3 est une élévation représentant la face arrière d'un miroir capteur ;

la figure 4 représente un détail du miroir de la figure 3 ;

la figure 5 représente une variante de miroir basculant destiné à un système de recentrage selon l'invention ; et

la figure 6 est un diagramme synoptique d'un appareil de régulation selon l'invention.

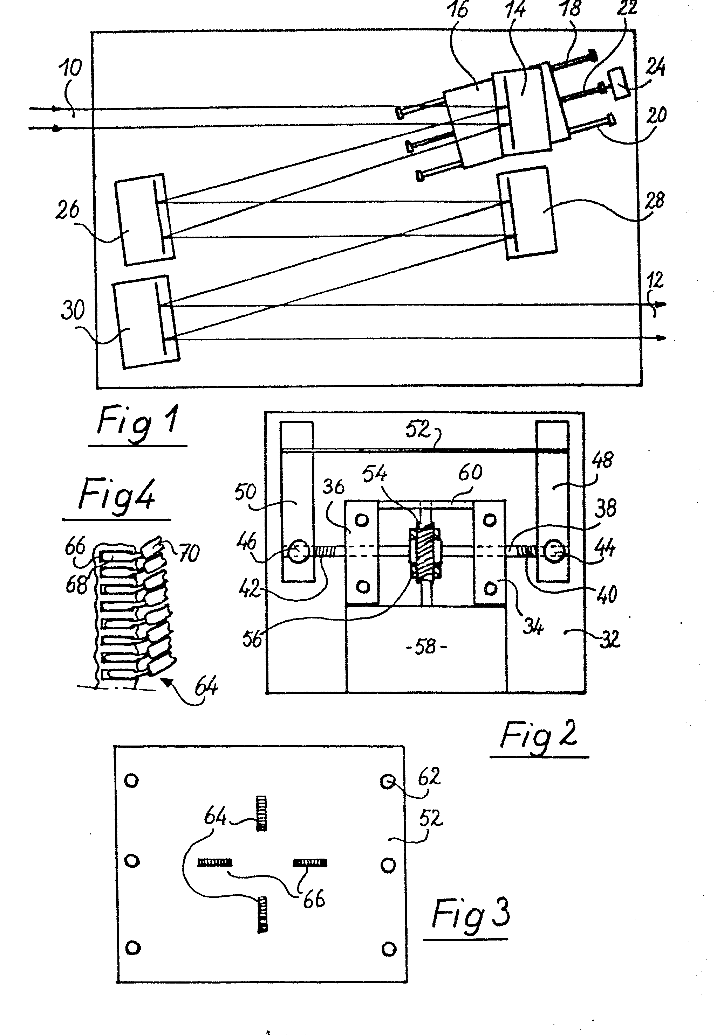

La figure 1 représente un système optique constituant un appareil de régulation des caractéristiques d'un faisceau lumineux selon l'invention. Cet appareil est destiné à modifier la dimension d'un faisceau laser et à le recentrer dans un plan qui est parallèle au plan de la figure 1.

Plus précisément, le faisceau lumineux reçu 10 est par exemple le faisceau d'un laser à $CO_2$ de puissance, par exemple de 5 kW. Ce faisceau présente parfois un déplacement latéral de son axe et sa section varie, notamment lorsque la puissance est modifiée, par exemple lorsqu'elle est réduite à 2 kW. L'appareil décrit n'assure la régulation que dans un plan, mais il suffit en association avec le système optique décrit dans le brevet français précité n° 82 10 286 car celui-ci comporte un miroir correcteur de forme cylindrique. Le plan dans lequel est effectuée la régulation par l'appareil de la figure 1 est perpendiculaire aux génératrices de l'élément correcteur décrit dans ce document.

Le faisceau laser 10 qui peut donc se déplacer latéralement et dont la largeur dans le plan de la figure 1 peut varier, doit former un faisceau 12 ayant toujours la même largeur et toujours centré de la même manière.

Le faisceau 10 parvient sur un premier miroir 14 monté sur un chariot 16 qui peut se déplacer sur des glissières 18, 20, sous la commande d'une vis-mère 22 entraînée par un servomoteur 24. Le miroir 14 renvoie le faisceau vers un second miroir 26. Il faut noter que l'orientation des glissières 18, 20 est telle que le chariot 16 se déplace parallèlement à l'axe optique de la partie du trajet du faisceau comprise entre les deux miroirs 14 et 26, si bien que l'axe optique, après le miroir 14, n'est plus modifié.

Le miroir 26 renvoie un faisceau vers un troisième miroir 28 qui le renvoie vers un quatrième miroir 30 qui transmet le faisceau régulé 12.

Dans le système représenté sur la figure 1, les miroirs 14 et 26 forment un système expanseur afocal, c'est-à-dire que le faisceau renvoyé par le miroir 26 est parallèle, comme le faisceau 10 reçu. Cependant, entre les deux miroirs 14 et 26, le faisceau diverge (il pourrait aussi bien converger). Les deux miroirs 28 et 30 forment un dispositif capteur décrit plus en détail dans la suite.

Dans le mode de réalisation considéré, les deux miroirs 14, 26 forment un système expanseur qui travaille autour d'un coefficient de grandissement de l'ordre de 1,5. En fonction des variations de la section du faisceau 10, ce coefficient de grandissement varie normalement entre 1,2 et 2 au maximum, en général entre 1,3 et 1,8 seulement. Ce système expanseur est formé de miroirs tels que représentés sur la figure 2.

La figure 2 représente un exemple de miroirs de l'appareil de la figure 1. Ces miroirs sont analogues à ceux qui sont décrits dans le brevet français précité, mais leur élément optique est plan à faces parallèles, c'est-à-dire que, lorsque les miroirs sont déformés, ils prennent une courbure de section droite circulaire.

Le dispositif représenté sur la figure 2 comporte

ntre deux flasques 32 (un seul étant représenté) deux montants fixes 34, 36 dans lesquels peut tourillonner un axe
38. Celui-ci ne peut pas se déplacer suivant sa longueur
car il est retenu par un dispositif convenable (non représenté).
Les extrémités de l'axe 38 sont filetées, comme indiqué
par les références 40 et 42, les filetages des deux extrémités ayant des pas opposés. Ces parties filetées sont vissées
dans des organes cylindriques 44 et 46 formant rotule, montés
dans des mors 48 et 50 dont les extrémités opposées maintiennent les bords d'une plaque plane à face parallèle 52 formant
miroir du côté extérieur (face supérieure sur la figure 2).

Une roue tangente 54 est montée sur l'axe 38 et l'entraîne en rotation lorsqu'elle est commandée par une vis
56 montée sur l'arbre d'un servomoteur 58, l'extrémité externe
de cet arbre tourillonnant dans une plaque fixe 60 portée
par les montants 34 et 36.

Lorsque le servomoteur 58 est entraîné en rotation
dans un sens ou dans un autre, il fait tourner la vis 56
qui fait tourner la roue tangente 54 qui visse ou dévisse
les rotules 44 et 46. De cette manière, l'extrémité inférieure
sur la figure 2 des mors 48 et 50 est tirée vers l'intérieur
ou poussée vers l'extérieur et provoque une déformation du
miroir 52.

Dans le mode de réalisation représenté sur la figure
1, le miroir 14 est convexe, c'est-à-dire que les extrémités
des mors 48 et 50 qui coopèrent avec la tige 38 sont rapprochées. Au contraire, le miroir 26 a ces extrémités de mors
qui sont éloignées afin que le miroir soit concave. La convexité du miroir 14 et la concavité du miroir 26 sont reliées
de manière que l'ensemble forme un système afocal.

Les miroirs 28 et 30 ont une plaque réfléchissante
52 qui porte à son dos des barrettes de thermistances comme
représenté sur la figure 3. Sur cette figure, la référence
52 désigne la plaque formant le miroir et la référence 62
les trous de montage dans les mors 48 et 50. Les références
64 et 66 désignent des barrettes de thermistances. Dans l'appareil de la figure 1, seules les barrettes 66 sont utilisées.

Cependant, comme les barrettes 64 et 66 sont identiques, on ne décrit qu'une barrette telle que 64 représentée sur la figure 4. Cette barrette comporte des thermistances sous forme de petites plaquettes dont l'épaisseur est d'environ 1 mm et qui sont disposées en bout en étant soudées contre la face de la plaque 52. La connexion de l'autre extrémité est assurée par une soudure 68 avec l'extrémité d'un fil 70. Les fils 70 des différentes barrettes parviennent à un organe de commande qui détermine la répartition des températures en fonction des résistances mesurées. Des résistances qui conviennent sont disponibles sous la référence CIAN auprès de la société LCC, Courbevoie, France.

Chacun des miroirs 28 et 30 comporte les deux barrettes de thermistances 66 qui permettent la détermination de l'emplacement des bords du faisceau parvenant sur le miroir correspondant. De cette manière, l'organe de commande, décrit plus en détail dans la suite du présent mémoire, assure la régulation de la manière suivante. Lorsque les miroirs capteurs 28 et 30 indiquent que le faisceau n'est pas centré (déplacement par rapport aux barrettes 66), l'organe de commande transmet des impulsions au servomoteur 24 jusqu'à ce que le faisceau soit centré sur un miroir capteur choisi à titre d'exemple, par exemple le miroir 30. Lorsque l'organe de commande détermine ensuite que la dimension du faisceau n'est pas convenable (en fonction de la position des bords du faisceau déterminée sur les barrettes de thermistances 66), il commande les servomoteurs des miroirs 14 et 26 de manière que le faisceau soit agrandi ou réduit.

Bien qu'on ait décrit un système travaillant dans un plan, lorsque la régulation doit être effectuée dans deux plans, deux systèmes tels que représentés sur la figure 1 peuvent être montés à 90° l'un de l'autre. Cependant, il est souhaitable que l'appareil réalisé ne comporte qu'un seul jeu de capteurs, par exemple tel que représenté sur la figure 3.

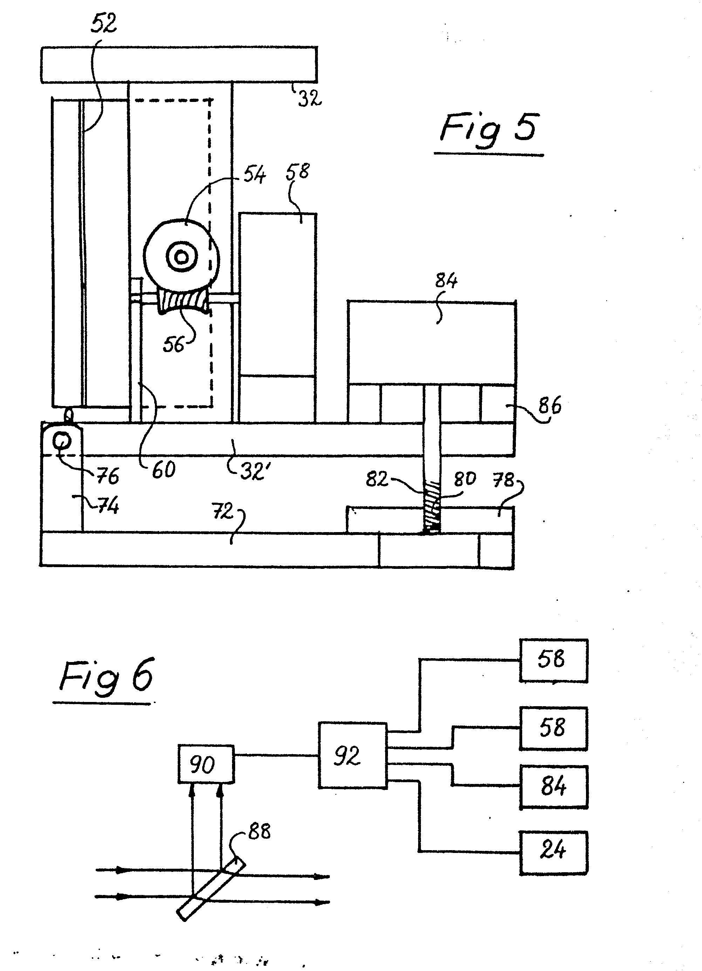

Dans un mode de réalisation dans lequel il est souhaitable que le faisceau 12 soit aussi centré latéralement en direction perpendiculaire au plan de la figure 1, sans que la dimension dans cette direction soit régulée, on peut utiliser des miroirs basculantstels que représentés sur la figure 5, par exemple pour la réalisation des miroirs 14 et 26. Ceux-ci sont commandés afin qu'ils basculent de quantités égales mais en sens opposés afin que le faisceau reste parallèle à lui-même mais se déplace en direction perpendiculaire au plan de la figure 1.

Sur la figure 5, le flasque inférieur 32 du miroir de la figure 2 est remplacé par un flasque prolongé 32' qui est supporté par une plaque 72 qui a des bras 74 portant un axe d'articulation 76. De cette manière, le flasque 32', et l'ensemble du miroir qu'il porte, peut basculer autour de l'axe 76. Une plaque 78 solidaire du socle 72 a un trou taraudé 80 dans lequel vient se visser un arbre fileté 82 solidaire de l'arbre d'un servomoteur 84 porté par un support 86 solidaire du flasque 32'. Lorsque le moteur tourne dans un sens ou dans l'autre, le flasque 32' bascule autour de l'axe 76, dans un sens ou dans l'autre.

On a considéré jusqu'à présent que les dispositifs capteurs étaient formés de miroirs ayant des barrettes ou des matrices de thermistances. Ces dispositifs conviennent dans l'application prévue, mais il ne s'agit pas cependant d'un système très élaboré et il est préférable de pouvoir assurer la régulation d'après la répartition réelle d'énergie à l'intérieur de toute la section du faisceau laser. La figure 6 représente un système capteur qui convient, c'est-à-dire qui permet l'analyse de la répartition d'énergie dans toute la section du faisceau.

L'appareil représenté sur la figure 6 comporte une lame transparente 88, formée d'un matériau transparent au faisceau laser considéré. Cette lame 88 laisse passer la plus grande partie de l'énergie du faisceau mais en réfléchit une petite partie, par exemple 1 ou 2 %, vers une caméra infrarouge 90. De telles caméras infrarouges sont disponibles dans le commerce. Etant donné que, dans le cas d'un faisceau de puissance, la puissance prélevée par la caméra 90 peut être importante, celle-ci peut être formée d'une matrice d'éléments sensibles à la longueur d'onde utilisée, sous une forme plus simple qu'une caméra de télévision.

Un organe de commande 92 à microprocesseur analyse la répartition d'énergie, détermine le centre du faisceau en fonction de cette répartition d'énergie et de sa dimension et commande en conséquence les servomoteurs 58 des miroirs déformables, 84 des miroirs basculants ou 24 de déplacement en translation, selon le cas. Il ne s'agit là que d'un exemple de régulation, travaillant en boucle fermée puisque la commande des moteurs 58 et 84 provoque une modification du faisceau prélevé par la lame 88. En effet, celle-ci est avantageusement placée en aval des organes commandés par les servomoteurs. Par exemple, dans l'appareil de la figure 1, un seul dispositif tel que représenté sur la figure 6 remplace les deux miroirs 28 et 30.

REVENDICATIONS

1. Appareil de régulation de caractéristiques d'un faisceau lumineux qui peut présenter des variations de sa section, caractérisé en ce qu'il comporte un système expanseur qui comprend :

- un dispositif capteur (28, 30) sensible à au moins un paramètre de la section du faisceau et destiné à former un signal correspondant,

- un dispositif expanseur (14, 26) destiné à modifier la section du faisceau afin qu'une dimension au moins de celle-ci soit multipliée par un coefficient de grandissement, et

- un dispositif (92) de commande destiné à recevoir le signal du dispositif capteur et à commander le dispositif expanseur par réglage de son coefficient de grandissement jusqu'à ce que le signal du capteur corresponde à une valeur de référence.

2. Appareil selon la revendication 1, caractérisé en ce que le dispositif expanseur comporte au moins deux miroirs déformables (14, 26), de préférence cylindriques de section droite circulaire.

3. Appareil selon l'une des revendications 1 et 2, caractérisé en ce que le dispositif expanseur (14, 26) est afocal.

4. Appareil selon l'une quelconque des revendications précédentes, caractérisé en ce qu'il comporte en outre un système de recentrage qui comprend :

- un dispositif capteur (28, 30) sensible à la position du faisceau parallèlement à lui-même par rapport à une position de référence et destiné à former un signal correspondant,

- un dispositif de recentrage (16-24) destiné à déplacer le faisceau parallèlement à lui-même dans au moins une direction perpendiculaire à l'axe du faisceau, et

- un dispositif de commande (92) destiné à recevoir un signal du dispositif capteur et à commander le dispositif de recentrage jusqu'à ce que le faisceau se trouve à une

position de référence.

5. Appareil selon la revendication 4, caractérisé en ce que le dispositif de recentrage assure le déplacement d'un miroir (14) parallèlement à l'axe optique d'une partie du trajet du faisceau.

6. Appareil selon la revendication 4, caractérisé en ce que le dispositif de recentrage assure le pivotement concomitant de deux miroirs autour d'axes parallèles (76).

7. Appareil selon l'une quelconque des revendications précédentes, caractérisé en ce que le dispositif capteur comporte une lame transparente (88) inclinée par rapport à l'axe du faisceau et un analyseur de la section du faisceau (90), de préférence une caméra vidéo.

8. Appareil selon l'une quelconque des revendications 1 à 6, caractérisé en ce que le dispositif capteur comporte au moins un miroir muni, sur une face non réfléchissante, d'une barrette ou d'une matrice d'éléments thermosensibles (64, 66).

9. Appareil selon l'une quelconque des revendications précédentes, caractérisé en ce qu'il comprend deux dispositifs capteurs (28, 30) formant une mire d'alignement.

10. Appareil selon l'une quelconque des revendications précédentes, caractérisé en ce que les dispositifs capteurs (28, 30) du système expanseur et du système de recentrage ont au moins une partie commune.

_Fig 1_

_Fig4_

_Fig 2_

_Fig 3_

Fig 5

Fig 6

# Office européen des brevets

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | US-A-3 757 125  (MITSUBISHI DENKI K.K.)<br>* Colonne 1, lignes 54-68; colonne 3, lignes 2-15; colonne 5, lignes 15-17; figures 1,5 * | 1 | G 02 B   27/00<br>G 02 B   26/08<br>B 23 K   26/06<br>B 23 Q   35/128 |
|  | --- |  |  |
| Y | US-A-3 957 339  (CATERPILLAR TRACTOR CO.)<br>* Colonne 2, lignes 46-49; colonne 3, lignes 22-25,57-61; figure 1 * | 1 |  |
| A |  | 2,3,5,6 |  |
|  | --- |  |  |
| Y,P | EP-A-O 141 724  (C.E.A.)<br>* Page 1, lignes 3-5,19-21,27-31; page 2, lignes 24-28, page 3, lignes 10-12,21-23; page 4, lignes 13-18; page 6, lignes 19-29 * | 1 | **DOMAINES TECHNIQUES RECHERCHES (Int Cl 4)**<br><br>G 02 B   27/00<br>G 02 B   26/08<br>B 23 K   26/10<br>B 23 K   26/06<br>B 23 K   26/04<br>B 23 K   26/02<br>G 05 B   19/23<br>B 23 Q   35/128 |
| A |  | 4,5,8 |  |
|  | --- |  |  |
| A | US-A-3 588 254  (G.E.C.)<br>* En entier * | 1 |  |
|  | ----- |  |  |

Le present rapport de recherche a été établi pour toutes les revendications

| Lieu de la recherche | Date d'achèvement de la recherche | Examinateur |
|---|---|---|
| LA HAYE | 02-07-1986 | WESBY P.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou apres cette date
D : cite dans la demande
L : cite pour d autres raisons

& : membre de la même famille, document correspondant

OEB Form 1503 03 82